Europäisches Patentamt

European Patent Office

Office européen des brevets

(11) Publication number: **0 264 976 B1**

# EUROPEAN PATENT SPECIFICATION

(45) Date of publication of patent specification: 20.03.91   (51) Int. Cl.⁵: **G02B  6/38**

(21) Application number: 87201547.4

(22) Date of filing: 05.06.84

(60) Publication number of the earlier application in accordance with Art.76 EPC: 0 128 044

(54) A ferrule for and a method of terminating a fiber optic transmission member.

(30) Priority: 06.06.83 US 501599
06.06.83 US 501597

(43) Date of publication of application:
27.04.88 Bulletin  88/17

(45) Publication of the grant of the patent:
20.03.91 Bulletin  91/12

(84) Designated Contracting States:
**DE FR NL**

(56) References cited:
**EP-A- 0 097 576
DE-A- 2 516 858
US-A- 4 303 304
US-A- 4 362 356**

(73) Proprietor: **AMP INCORPORATED
P.O. Box 3608 470 Friendship Road
Harrisburg Pennsylvania 17105(US)**

(72) Inventor: **Caron, Bernard George
4330 Winthrop Drive
Harrisburg Pennsylvania 17112(US)**
Inventor: **Cooper, Ronald Francis
Adams County Winery Peach Tree Torad
Orrtanna Pennsylvania 17353(US)**

(74) Representative: **Warren, Keith Stanley et al
BARON & WARREN 18 South End Kensington
London W8 5BU(GB)**

## Description

DESCRIPTION FOR THE CONTRACTING STATE : DE

This invention relates to a ferrule for and a method of terminating a fiber optic transmission member.

US Patent No. 3 999 837 discloses a fiber optic connector which comprises a housing member and ferrule members terminated onto exposed ends of fiber optic transmission members. The housing member has a profiled bore including a center cylindrical section and outer first and second identically-shaped sections of different diameters. The ferrule members have cylindrical nose section that tightly fit into the cylindrical section of the housing, tapered sections that engage the outer first and second sections, and annular shoulders that engage surfaces of the housing member. Coupling members on the ferrule members are coupled to the housing member securing the ferrule members in the profiled bore with the cylindrical section applying radial compressive forces to the cylindrical nose sections thereby axially aligning the fiber optic transmission members and the annular shoulders engage the surfaces of the housing member limiting movement of the ferrule members into the profiled bore, positioning the front surfaces of the ferrule members adjacent each other and minimizing misalignment of the fiber optic transmission members when lateral forces are applied to the ferrule members.

It is an object to provide an improved ferrule member to facilitate polishing of a fiber optic transmission member terminated therein.

There is disclosed in EP-A-097 576 which is comprised in the state of the art pursuant to Article 54(3) and (4) EPC, a ferrule for use in terminating a fiber optic transmission member, the ferrule having a domed front surface.

According to one aspect thereof, the present invention consists in a ferrule member terminating a fiber optic transmission member, the ferrule member having a fiber-receiving bore extending therethrough from a rearward end to a front end thereof, characterized in that the portion of the bore proximate the front end has a diameter substantially the same as that of a forward end of the fiber optic transmission member to be inserted therethrough during termination thereof, and that the front end of said ferrule member is formed to have initially a domed front surface prior to termination of the fiber optic transmission member by said ferrule member, with the domed front surface and the forward end of said fiber optic transmission member intended to be substantially polished away subsequent to termination of said transmission member.

According to another aspect thereof the present invention consists in a method of terminating an end of a fiber optic transmission member within a ferrule member, comprising the steps of molding the ferrule member from a suitable material with a front end of the ferrule member having a domed front surface and a bore extending through the ferrule member and through the domed front surface; securing the end of the fiber optic transmission member in the bore with a front end of the fiber optic transmission member being coincident with the domed front surface; and polishing the domed front surface and the front end of the fiber optic transmission member thereby forming a flat polished surface of the front end of the ferrule member including a flat polished surface of the front end of the fiber optic transmission member.

According to a further aspect thereof the present invention consists in a ferrule member of resilient plastics material for use in terminating a fiber optic transmission member, the ferrule member having a fiber-receiving bore extending therethrough from a rearward end to a front end thereof, characterized in that the front end of said ferrule member is formed to have initially a domed front surface prior to termination of the fiber optic transmission member by said ferrule member, with the domed front surface and the forward end of said fiber optic transmission member intended to be substantially polished away subsequent to termination of said transmission member.

An embodiment of the invention will now be described, by way of example, with reference to the accompanying partly diagrammatic drawings, in which:-

Figure 1 is a perspective view of a ferrule member terminated to a fiber optic transmission member and a polishing fixture exploded therefrom,

Figure 2 is a perspective view showing the polishing of the front end of the ferrule member and fiber optic transmission member,

Figure 3 is a cross-sectional view of the front end of the ferrule member terminated onto a fiber optic transmission member prior to polishing.

Figure 4 is a view similar to Figure 3 after the front end of the ferrule member and fiber optic transmission member have been polished, and

Figure 5 is a view similar to Figure 3 showing a cleaved end of a fiber optic transmission member prior to polishing the front end of the terminated ferrule member.

A ferrule member 10 is terminated onto an end of a fiber optic cable 12. The fiber optic cable 12 includes a fiber optic tranmission member 14 surrounded by cladding material to enable light to be transmitted ther ealong. Buffer material not shown, protects the cladded fiber optic transmission member 14 and an outer jacket 18 protects the entire cable assembly. The cable typically includes strength members (not shown) to provide tensile strength thereto. Fiber optic cable 12 is stripped to expose a length of fiber optic transmission member 14 to enable it to be terminated in ferrule member 10. Fiber optic transmission member 14 can be either plastic or glass.

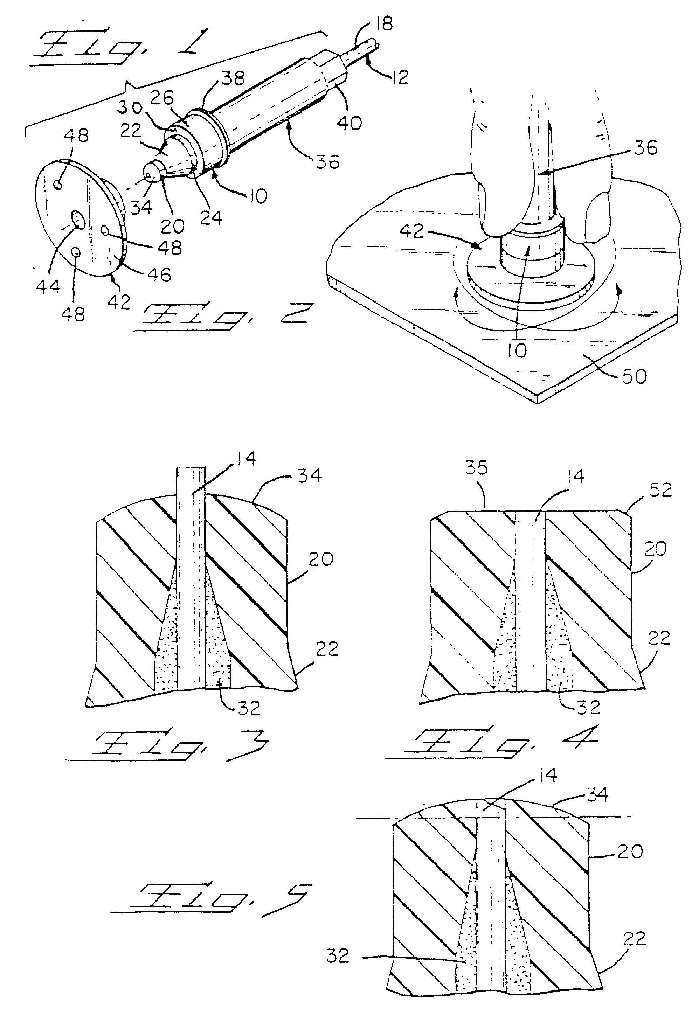

Ferrule member 10 is preferably molded from a suitable plastic material having resilient characteristics. Ferrule member 10 is of the type disclosed in US Patent No. 3 999 837, the disclosure of which is completely incorporated herein by reference. Ferrule member 10 has a profiled front end which comprises a front surface 34, a front cylindrical section 20, a tapered section 22, an intermediate cylindrical alignment section 24, a rear cylindrical section 26, and a tubular section extending rearwardly from a rear cylindrical section 26 and being hidden beneath a metal ferrule 36 A shoulder 30 is located at the junction of sections 24 and 26. A profiled bore 32 extends through ferrule member 10 and necks down in front cylindrical section 20 to a diameter to accommodate fiber optic transmission member 14. Front surface 34 of ferrule member 10 has a domed configuration when formed, as best illustrated in Figure 3. The metal ferrule 36 is disposed on said rearwardly extending tubular section and has a flange 38 in engagement with section 26. Outer end 40 of metal ferrule 36 has a hexagonal or other suitable configuration.

Fiber optic cable 12 is terminated in ferrule member 10 by inserting a stripped end of fiber optic cable 12 within bore 32 until a short section of fiber optic transmission member 14 extends outwardly beyond domed front end 34. An epoxy resin can be located in bore 32 to secure fiber optic transmission member 14 in position in ferrule member 10, whereafter metal ferrule 36 is crimped onto outer jacket 18 of fiber optic cable 12 thereby terminating fiber optic cable 12 in ferrule member 10. The section of fiber optic transmission member 14 that extends beyond domed front end 34 is removed by cutting, if transmission member 14 is plastic, or is cleaved, if transmission member 14 is glass. Fiber optic cable 12 can be secured in ferrule member 10 in accordance with the teachings of European Patent Application No. 83302655.2 filed 10 May 1983 or in any other suitable manner.

After the fiber optic cable 12 has been terminated in ferrule member 10, the profiled front end of ferrule member 10 is frictionally positioned in a profiled bore 44 of polishing fixture 42; bore 44 has the same configuration as that of sections 20, 22 and 24 of ferrule member 10 except that they are dimensioned to compress section 20 in tight engagement with the fiber optic transmission member 14 in bore 32 and the domed front end 34 extends beyond the outer flat surface 46 of fixture 42. Radiussed projections 48 extend outwardly from surface 46.

Terminated ferrule member 10 with fixture 42 thereon is now subjected to a polishing action by fixture 42 moving relative to a polishing medium 50 such as, for example, very fine silicon carbide or aluminum oxide grit, as shown in Figure 2, for a period of time. Radiussed projections 48 stabilize the polishing and, when they are worn away, the domed front surface 34 along with the end of fiber optic transmission member 14 are polished as a flat surface 35 and are in the same plane, as illustrated in Figure 4, leaving a radiussed peripheral surface 52 between the front polished surface 35 and the external surface of cylindrical section 20.

As shown in Figure 5, when fiber optic transmission member is glass and is cleaved, the cleaved end can be uneven. Thus, when the domed front end 34 is polished as hereinabove described, the uneven end of fiber optic transmission member 14 is polished to a flat planar configuration, as shown in Figure 4, thereby eliminating the fragmented end.

Advantages of having a domed front surface 34 are less material to polish and this reduces the amount of time to polish the front end of ferrule member 10.

The radiussed peripheral surface 52 of a ferrule 10 enables a reservoir space to be formed within a connector for accommodating index expansion fluid as more fully disclosed in EP-A-0 128 044 from which this application is divided.


DESCRIPTION FOR THE CONTRACTING STATES : FR, NL


This invention relates to a ferrule for and a method of terminating a fiber optic transmission member.

US Patent No. 3 999 837 discloses a fiber optic connector which comprises a housing member and ferrule members terminated onto exposed ends of fiber optic transmission members. The housing member has a profiled bore including a center cylindrical section and outer first and second identically-shaped sections of different diameters. The ferrule members have cylindrical nose sections that tightly fit into the cylindrical section of the housing, tapered sections that engage the outer first and second sections, and annular shoulders that engage surfaces of the housing member. Coupling members on the ferrule members are coupled to the housing member securing the ferrule members in the profiled bore with the cylindrical section applying radial compressive forces to the cylindrical nose sections thereby axially aligning the fiber optic transmission members and the annular shoulders engage the surfaces of the housing member limiting movement of the ferrule members into the profiled bore, positioning the front surfaces of the ferrule members adjacent each other and minimizing misalignment of the fiber optic transmission members when lateral forces are applied to the ferrule members.

It is an object to provide an improved ferrule member to facilitate polishing of a fiber optic transmission member terminated therein.

According to one aspect thereof, the present invention consists in a ferrule member for use in terminating a fiber optic transmission member, the ferrule member having a fiber-receiving bore extending therethrough from a rearward end to a front end thereof, characterized in that the front end on said ferrule member is formed to have initially a domed front surface prior to termination of the fiber optic transmission member by said ferrule member, with the domed front surface and the forward end of said fiber optic transmission member intended to be substantially polished away subsequent to termination.

According to another aspect thereof the present invention consists in a method of terminating an end of a fiber optic transmission member within a ferrule member, according to the invention, comprises the steps of molding the ferrule member from a suitable material with a front end of the ferrule member having a domed front surface and a bore extending through the ferrule member and through the domed front surface; securing the end of the fiber optic transmission member in the bore with a front end of the fiber optic transmission member being coincident with the domed front surface; and polishing the domed front surface and the front end of the fiber optic transmission member thereby forming a flat polished surface of the front end of the ferrule member including a flat polished surface of the front end of the fiber optic transmission member.

An embodiment of the present invention will now be described, by way of example, with reference to the accompanying partly diagrammatic drawings, in which:-

Figure 1 is a perspective view of a ferrule member terminated to a fiber optic transmission member and a polishing fixture exploded therefrom,

Figure 2 is a perspective view showing the polishing of the front end of the ferrule member and fiber optic transmission member,

Figure 3 is a cross-sectional view of the front end of the ferrule member terminated onto a fiber optic transmission member prior to polishing.

Figure 4 is a view similar to Figure 3 after the front end of the ferrule member and fiber optic transmission member have been polished, and

Figure 5 is a view similar to Figure 3 showing a cleaved end of a fiber optic transmission member prior to polishing the front end of the terminated ferrule member.

A ferrule member 10 is terminated onto an end of a fiber optic cable 12. The fiber optic cable 12 includes a fiber optic tranmission member 14 surrounded by cladding material to enable light to be transmitted therealong. Buffer material not shown protects the cladded fiber optic transmission member 14 and an outer jacket 18 protects the entire cable assembly. The cable typically includes strength members (not shown) to provide tensile strength thereto. Fiber optic cable 12 is stripped to expose a length of fiber optic transmission member 14 to enable it to be terminated in ferrule member 10. Fiber optic transmission member 14 can be either plastic or glass.

Ferrule member 10 is preferably molded from a suitable plastic material having resilient characteristics. Ferrule member 10 is of the type disclosed in US Patent No. 3 999 837, the disclosure of which is completely incorporated herein by reference. Ferrule member 10 has a profiled front end which comprises a front surface 34, a front cylindrical section 20, a tapered section 22, an intermediate cylindrical alignment section 24, a rear cylindrical section 26, and a tubular section extending rearwardly from a rear cylindrical section 26 and being hidden beneath a metal ferrule 36 A shoulder 30 is located at the junction of sections 24 and 26. A profiled bore 32 extends through ferrule member 10 and necks down in front cylindrical section 20 to a diameter to accommodate fiber optic transmission member 14. Front surface 34 of ferrule member 10 has a domed configuration when formed, as best illustrated in Figure 3. The metal ferrule 36 is disposed on said rearwardly extending tubular section and has a flange 38 in engagement with section 26. Outer end 40 of metal ferrule 36 has a hexagonal or other suitable configuration.

Fiber optic cable 12 is terminated in ferrule member 10 by inserting a stripped end of fiber optic cable 12 within bore 32 until a short section of fiber optic transmission member 14 extends outwardly beyond domed front end 34. An epoxy resin can be located in bore 32 to secure fiber optic transmission member 14 in position in ferrule member 10, whereafter metal ferrule 36 is crimped onto outer jacket 18 of fiber optic cable 12 thereby terminating fiber optic cable 12 in ferrule member 10. The section of fiber optic transmission member 14 that extends beyond domed front end 34 is removed by cutting, if transmission member 14 is plastic, or is cleaved, if transmission member 14 is glass. Fiber optic cable 12 can be secured in ferrule member 10 in accordance with the teachings of European Patent Application No. 83302655.2 filed 10 May 1983 or in any other suitable manner.

After the fiber optic cable 12 has been terminated in ferrule member 10, the profiled front end of ferrule member 10 is frictionally positioned in a profiled bore 44 of polishing fixture 42; bore 44 has the same configuration as that of sections 20, 22 and 24 of ferrule member 10 except that they are dimensioned to compress section 20 in tight engagement with the fiber optic transmission member 14 in bore 32 and the domed front end 34 extends beyond the outer flat surface 46 of fixture 42. Radiussed projections 48 extend outwardly from surface 46.

Terminated ferrule member 10 with fixture 42 thereon is now subjected to a polishing action by fixture 42 moving relative to a polishing medium 50 such as, for example, very fine silicon carbide or aluminum oxide grit, as shown in Figure 2, for a period of time. Radiussed projections 48 stabilize the polishing and, when they are worn away, the domed front surface 34 along with the end of fiber optic transmission member 14 are polished as a flat surface 35 and are in the same plane, as illustrated in Figure 4, leaving a radiussed peripheral surface 52 between the front polished surface 35 and the external surface of cylindrical section 20.

As shown in Figure 5, when fiber optic transmission member is glass and is cleaved, the cleaved end can be uneven. Thus, when the domed front end 34 is polished as hereinabove described, the uneven end of fiber optic transmission member 14 is polished to a flat planar configuration, as shown in Figure 4, thereby eliminating the fragmented end.

Advantages of having a domed front surface 34 are less material to polish and this reduces the amount of time to polish the front end of ferrule member 10.

The radiussed peripheral surface 52 of a ferrule 10 enables a reservoir space to be formed within a connector for accommodating index expansion fluid as more fully disclosed in EP-A-0 128 044 from which this application is divided.

## Claims

1. A ferrule member (10) terminating a fiber optic transmission member (14), the ferrule member having a fiber-receiving bore (32) extending therethrough from a rearward end to a front end thereof, characterized in that the portion of the bore (32) proximate the front end has a diameter substantially the same as that of a forward end of the fiber optic transmission member (14) to be inserted therethrough during termination thereof, and that the front end of said ferrule member (10) is formed to have initially a domed front surface (34) prior to termination of the fiber optic transmission member (14) by said ferrule member (10), with the domed front surface (34) and the forward end of said fiber optic transmission member (14) intended to be substantially polished away subsequent to termination of said transmission member (14).

2. A ferrule member (10) of resilient plastics material for us in terminating a fiber optic transmission member (14), the ferrule member having a fiber-receiving bore (32) extending therethrough from a rearward end to a front end thereof, characterized in that the front end of said ferrule member (10) is formed to have initially a domed front surface (34) prior to termination of the fiber optic transmission member (14) by said ferrule member (10), with the domed front surface (34) and the forward end of said fiber optic transmission member (14) intended to be substantially polished away subsequent to termination of said transmission member (14).

3. A method of terminating an end of a fiber optic transmission member (14) within a ferrule member (10), comprising the steps of:
   molding the ferrule member (10) from a suitable material with a front end of the ferrule member (10) having a domed front surface (34) and a bore (56) extending through the ferrule member (10) and through the domed front surface (34);
   securing the end of the fiber optic transmission member (14) in the bore (56) with a front end of the fiber optic transmission member (14) being coincident with the domed front surface (34); and
   polishing the domed front surface (34) and the front end of the fiber optic transmission member (14) thereby forming a flat polished surface (35) of the front end of the ferrule member (10) including a flat polished surface of the front end of the fiber optic transmission member (14).

4. A method as set forth in claim 3, wherein a radiussed peripheral surface (52) is left after the polishing step at the flat polished front surface (35) of the ferrule member (10).

Claim for the following Contracting States : FR, NL

1. A ferrule member (10) for use in terminating a fiber optic transmission member (14), the ferrule member having a fiber-receiving bore (32) extending therethrough from a rearward end to a front end thereof, characterized in that the front end on said ferrule member (10) is formed to have initially a domed front surface (34) prior to termination of the fiber optic transmission member (14) by said ferrule member (10), with the domed front surface (34) and the forward end of said fiber optic transmission member (14) intended to be substantially polished away subsequent to termination.

2. A method of terminating an end of a fiber optic transmission member (14) within a ferrule member (10), comprising the steps of:
    molding the ferrule member (10) from a suitable material with a front end of the ferrule member (10) having a domed front surface (34) and a bore (56) extending through the ferrule member (10) and through the domed front surface (34);
    securing the end of the fiber optic transmission member (14) in the bore (56) with a front end of the fiber optic transmission member (14) being coincident with the domed front surface (34); and
    polishing the domed front surface (34) and the front end of the fiber optic transmission member (14) thereby forming a flat polished surface (35) of the front end of the ferrule member (10) including a flat polished surface of the front end of the fiber optic transmission member (14).

3. A method as set forth in claim 2, wherein a radiussed peripheral surface (52) is left after the polishing step at the flat polished front surface (35) of the ferrule member (10).

**Revendications**

1. Elément à virole (10) terminant un élément (14) de transmission à fibre optique, l'élément à virole étant traversé par une lumière (32) de réception d'une fibre s'étendant d'une extrémité arrière à une extrémité avant de cet élément à virole, caractérisé en ce que le tronçon de la lumière (32) proche de l'extrémité avant possède un diamètre sensiblement égal à celui d'une extrémité avant de l'élément (14) de transmission à fibre optique devant y être inséré durant sa terminaison, et en ce que l'extrémité avant dudit élément à virole (10) est formée de façon à avoir initialement une surface avant bombée (34) avant la terminaison de l'élément (14) de transmission à fibre optique par ledit élément à virole (10), la surface avant bombée (34) et l'extrémité avant dudit élément (14) de transmission à fibre optique étant prévues pour être sensiblement polies après la terminaison dudit élément (14) de transmission.

2. Elément à virole (10) en matière plastique élastique à utiliser dans la terminaison d'un élément (14) de transmission à fibre optique, l'élément à virole étant traversé par une lumière (32) de réception d'une fibre s'étendant d'une extrémité arrière à une extrémité avant de cet élément à virole, caractérisé en ce que l'extrémité avant dudit élément à virole (10) est formée de façon à avoir initialement une surface avant bombée (34) avant la terminaison de l'élément (14) de transmission à fibre optique par ledit élément à virole (10), la surface avant bombée (34) et l'extrémité avant dudit élément (14) de transmission à fibre optique étant prévues pour être sensiblement polies après la terminaison dudit élément (14) de transmission.

3. Procédé de terminaison d'une extrémité d'un élément (14) de transmission à fibre optique dans un élément à virole (10), comprenant les étapes qui consistent :
    à mouler l'élément à virole (10) en une matière convenable, une extrémité avant de l'élément à virole (10) ayant une surface avant bombée (34) et une lumière (56) s'étendant à travers l'élément à virole (10) et à travers la surface avant bombée (34) ;
    à fixer l'extrémité de l'élément (14) de transmission à fibre optique dans la lumière (56) de façon qu'une extrémité avant de l'élément (14) de transmission à fibre optique coïncide avec la surface avant bombée (34) ; et
    à polir la surface avant bombée (34) et l'extrémité avant de l'élément (14) de transmission à fibre optique afin de former une surface polie plate (35) de l'extrémité avant de l'élément à virole (10) comprenant une surface polie plate de l'extrémité avant de l'élément (14) de transmission à fibre optique.

4. Procédé selon la revendication 3, dans lequel une surface périphérique arrondie (52) est laissée après l'étape de polissage à la surface avant polie plate (35) de l'élément à virole (10).

Revendications pour les Etats contractants suivants : FR, NL

1. Elément à virole (10) utilisé dans la terminaison d'un élément (14) de transmission à fibre optique, l'élément à virole étant traversé par une lumière (32) de réception d'une fibre s'étendant d'une extrémité arrière jusqu'à une extrémité avant de l'élément à virole, caractérisé en ce que l'extrémité avant dudit élément à virole (10) est formée de façon à avoir initialement une surface avant bombée (34) avant la terminaison de l'élément (14) de transmission à fibre optique par ledit élément à virole (10), la surface avant bombée (34) et l'extrémité avant dudit élément (14) de transmission à fibre optique étant prévues pour être sensiblement polies après la terminaison.

2. Procédé de terminaison d'une extrémité d'un élément (14) de transmission à fibre optique à l'intérieur d'un élément à virole (10), comprenant les étapes qui consistent :

à mouler l'élément à virole (10) en une matière convenable, une extrémité avant de l'élément à virole (10) ayant une surface avant bombée (34) et une lumière (56) s'étendant à travers l'élément à virole (10) et à travers la surface avant bombée (34) ;

à fixer l'extrémité de l'élément (14) de transmission à fibre optique dans la lumière (56), une extrémité avant de l'élément (14) de transmission à fibre optique coïncidant avec la surface avant bombée (34) ; et

à polir la surface avant bombée (34) et l'extrémité avant de l'élément (14) de transmission à fibre optique afin de former une surface polie plate (35) de l'extrémité avant de l'élément à virole (10) comprenant une surface polie plate de l'extrémité avant de l'élément (14) de transmission à fibre optique.

3. Procédé selon la revendication 2, dans lequel une surface périphérique arrondie (52) est laissée après l'étape de polissage à la surface avant polie plate (35) de l'élément à virole (10).

**Ansprüche**

1. Zwingenelement (10) zum Abschließen eines faseroptischen Übertragungselements (14), wobei das Zwingenelement eine sich von seinem hinteren Ende zu seinem vorderen Ende durch dieses hindurcherstreckende Faseraufnahmebohrung (32) aufweist, dadurch gekennzeichnet, daß der in der Nähe des vorderen Endes befindliche Bereich der Bohrung (32) einen Durchmesser aufweist, der dem Durchmesser eines während des Abschließvorgangs durch die Bohrung hindurch einzuführenden vorderen Endes des faseroptischen Übertragungselements (14) im wesentlichen entspricht, und daß das vordere Ende des Zwingenelements (10) derart ausgebildet ist, daß es zu Beginn, vor dem Abschließen des faseroptischen Übertragungselements (14) durch das Zwingenelement (10), eine kuppelartige Frontfläche (34) besitzt, wobei die kuppelartige Frontfläche (34) und das vordere Ende des faseroptischen Übertragungselements (14) nach dem Abschließen des Übertragungselements (14) im wesentlichen wegzupolieren sind.

2. Zwingenelement (10) aus federnd nachgiebigem Kunststoffmaterial zur Verwendung beim Abschließen eines faseroptischen Übertragungselements (14), wobei das Zwingenelement eine sich von seinem hinteren Ende zu seinem vorderen Ende durch dieses hindurcherstreckende Faseraufnahmebohrung (32) aufweist, dadurch gekennzeichnet, daß das vordere Ende des Zwingenelements (10) derart ausgebildet ist, daß es zu Beginn, vor dem Abschließen des faseroptischen Übertragungselements (14) durch das Zwingenelement (10), eine kuppelartige Frontfläche (34) besitzt, wobei die kuppelartige Frontfläche (34) und das vordere Ende des faseroptischen Übertragungselements (14) nach dem Abschließen des Übertragungselements (14) im wesentlichen wegzupolieren sind.

3. Verfahren zum Abschließen eines Endes eines faseroptischen Übertragungselements (14) innerhalb eines Zwingenelements (10), gekennzeichnet durch folgende Schritte: Formen des Zwingenelements (10) aus einem geeigneten Material in einer derartigen Weise, daß das vordere Ende des Zwingenelements (10) eine kuppelartige Frontfläche (34) aufweist und sich eine Bohrung (56) durch das Zwingenelement (10) und durch die kuppelartige Frontfläche (34) hindurcherstreckt;

Befestigen des Endes des faseroptischen Übertragungselements (14) in der Bohrung (56) in einer derartigen Weise, daß ein vorderes Ende des faseroptischen Übertragungselements (14) mit der kuppelartigen Frontfläche (34) zusammenfällt; und Polieren der kuppelartigen Frontfläche (34) und des vorderen Endes des faseroptischen Übertragungselements (14) derart, daß eine ebene polierte Fläche (35) an dem vorderen Ende des Zwingenelements (10) gebildet wird, die eine ebene polierte Fläche an dem vorderen Ende des faseroptischen Übertragungselements (14) beinhaltet.

4. Verfahren nach Anspruch 3, dadurch gekennzeichnet, daß nach dem Polierschritt an der ebenen polierten Frontfläche (35) des Zwingenelements (10) eine gerundete Umfangsfläche (52) verbleibt.

Patentansprüche für folgende Vertragsstaaten : FR, NL

1. Zwingenelement (10) zur Verwendung beim Abschließen eines faseroptischen Übertragungselements (14), wobei das Zwingenelement eine sich von seinem hinteren Ende zu seinem vorderen Ende durch dieses hindurcherstreckende Faseraufnahmebohrung (32) aufweist, dadurch gekennzeichnet, daß das vordere Ende des Zwingenelements (10) derart ausgebildet ist, daß es zu Beginn, vor dem Abschließen des faseroptischen Übertragungselements (14) durch das Zwingenelement (10), eine kuppelartige Frontfläche (34) besitzt, wobei die kuppelartige Frontfläche (34) und das vordere Ende des faseroptischen Übertragungselements (14) nach dem Abschließen im wesentlischen wegzupolieren sind.

2. Verfahren zum Abschließen eines Endes eines faseroptischen Übertragungselements (14) innerhalb eines Zwingenelements (10), gekennzeichnet durch folgende Schritte: Formen des Zwingenelements (10) aus einem geeigneten Material in einer derartigen Weise, daß das vordere Ende des Zwingenelements (10) eine kuppelartige Frontfläche (34) aufweist und sich eine Bohrung (56) durch das Zwingenelement (10) und durch die kuppelartige Frontfläche (34) hindurcherstreckt; Befestigen des Endes des faseroptischen Übertragungselements (14) in der Bohrung (56) in einer derartigen Weise, daß ein vorderes Ende des faseroptischen Übertragungselements (14) mit der kuppelartigen Frontfläche (34) zusammenfällt; und Polieren der kuppelartigen Frontfläche (34) und des vorderen Endes des faseroptischen Übertragungselements (14) derart, daß eine ebene polierte Fläche (35) an dem vorderen Ende des Zwingenelements (10) gebildet wird, die eine ebene polierte Fläche an dem vorderen Ende des faseroptischen Übertragungselements (14) beinhaltet.

3. Verfahren nach Anspruch 2, dadurch gekennzeichnet, daß nach dem Polierschritt an der ebenen polierten Frontfläche (35) des Zwingenelements (10) eine gerundete Umfangsfläche (52) verbleibt.

Fig. 1

Fig. 2

Fig. 3

Fig. 4

Fig. 5